# EUROPÄISCHE PATENTANMELDUNG

(11) **EP 3 566 845 A1**
(43) Veröffentlichungstag der Anmeldung: **13.11.2019**
(21) Anmeldenummer: 19171024.3
(22) Anmeldetag: 25.04.2019
(51) Int. Cl.: B29C 44/34, B29C 44/58, B29C 67/20, B29C 44/44, B29C 44/20, B29C 44/54

(54) **VERFAHREN ZUR HERSTELLUNG EINES VERBUNDSTRUKTURBAUTEILS**

(30) Priorität: 07.05.2018 DE 102018110904
(71) Anmelder: Werkzeugbau Siegfried Hofmann GmbH, 96215 Lichtenfels (DE); FOX Velution GmbH, 96215 Lichtenfels (DE)
(72) Erfinder: Beck, Jonas, 96050 Bamberg (DE); Hofmann, Stefan, 96215 Lichtenfels (DE); Hofmann, Günther, 96215 Lichtenfels (DE); Vetter, Jörg, 64839 Münster (DE); Lucht, Mirjam, 91593 Burgbernheim (DE)
(74) Vertreter: Hafner & Kohl

(57) **Zusammenfassung**

Verfahren zur Herstellung eines eine ein Partikelschaummaterial (2) umfassende Partikelschaumstruktur (3) umfassenden Verbundstrukturbauteils (1), umfassend die Schritte:
- Bereitstellen wenigstens eines einen mit wenigstens einem partikulären Partikelschaummaterial (2) befüllbaren Aufnahmeraum (5) umfassenden umformbaren Aufnahmeelements (4),
- Befüllen des Aufnahmeraums (5) des Aufnahmeelements (4) mit wenigstens einem partikulären Partikelschaummaterial (2) unter Ausbildung eines gesondert handhabbaren umformbaren Zwischenbauteils (7),
- Durchführen wenigstens einer Maßnahme zum Umformen des Zwischenbauteils (7) von einer vor dem Durchführen der wenigstens einen Maßnahme gegebenen ersten Geometrie in eine nach dem Durchführen der wenigstens einen Maßnahme gegebene, von der ersten Geometrie zumindest abschnittsweise, gegebenenfalls vollständig, verschiedene zweite Geometrie,
- Durchführen wenigstens einer Maßnahme zum Verbinden des in dem Aufnahmeraum (5) des Aufnahmeelements (4) eingefüllten partikulären Partikelschaummaterials (2) von einem vor dem Durchführen der wenigstens einen Maßnahme gegebenen nicht verbundenen Zustand in einen nach Durchführen der Maßnahme gegebenen verbundenen Zustand.

## Beschreibung

Die Erfindung betrifft ein Verfahren zur Herstellung eines eine ein Partikelschaummaterial umfassende Partikelschaumstruktur umfassenden Verbundstrukturbauteils.

Verfahren zur Herstellung von Verbundstrukturbauteilen, welche eine ein Partikelschaummaterial umfassende Partikelschaumstruktur umfassen, sind aus dem Stand der Technik in unterschiedlichen Ausführungsformen dem Grunde nach bekannt.

Entsprechende Verfahren erfordern bis dato regelmäßig das Einfüllen eines Partikelschaummaterials in eine durch Werkzeugwandungsabschnitte definierte Werkzeugkavität eines Werkzeugs. Das Befüllen Werkzeugkavität eines entsprechenden Werkzeugs mit Partikelschaummaterial kann aufgrund der partikulären und somit vergleichsweise schlecht handhabbaren Struktur des Partikelschaummaterials vergleichsweise aufwändig sein.

Folglich werden im Rahmen entsprechender Verfahren zur Herstellung von entsprechenden Verbundstrukturbauteilen bisweilen komplexe Befülleinrichtungen, d. h. z. B. in Form von zur Förderung von Partikelschaummaterial eingerichtete Fördereinrichtungen verwendet, um eine entsprechende Werkzeugkavität mit Partikelschaummaterial zu befüllen.

Das Befüllen der Werkzeugkavität eines Werkzeugs mit Partikelschaummaterial stellt sonach einen unter anlagen- bzw. fertigungstechnischen Gesichtspunkten verbesserungswürdigen Teilvorgang im Rahmen der Herstellung eines entsprechenden Verbundstrukturbauteils dar.

Der Erfindung liegt die Aufgabe zugrunde, ein demgegenüber verbessertes Verfahren zur Herstellung eines eine ein Partikelschaummaterial umfassende Partikelschaumstruktur umfassenden Verbundstrukturbauteils anzugeben.

Die Aufgabe wird durch ein Verfahren gemäß Anspruch 1 gelöst. Die hierzu abhängigen Ansprüche betreffen mögliche Ausführungsformen des Verfahrens.

Das hierin beschriebene Verfahren dient zur Herstellung eines Verbundstrukturbauteils. Das Verbundstrukturbauteil umfasst eine Partikelschaumstruktur. Die Partikelschaumstruktur umfasst ein Partikelschaummaterial. Das Partikelschaummaterial weist vor seiner Verarbeitung im Rahmen des hierin beschriebenen Verfahrens eine partikuläre Struktur auf; das Partikelschaummaterial liegt vor seiner Verarbeitung im Rahmen des hierin beschriebenen Verfahrens sonach typischerweise als Vielzahl an einzelnen, insbesondere kugeligen, länglichen, d. h. insbesondere stäbchenartigen bzw. - förmigen, oder mahlgutartigen, Partikelschaummaterialpartikeln vor.

Bei dem Partikelschaummaterial bzw. entsprechenden Partikelschaummaterialpartikeln kann es sich um ein noch nicht expandiertes Partikelschaummaterial bzw. noch nicht expandierte Partikelschaummaterialpartikel, um ein vorexpandiertes Partikelschaummaterial bzw. vorexpandierte Partikelschaummaterialpartikel oder um ein vollständig expandiertes Partikelschaummaterial bzw. vollständig expandierte Partikelschaummaterialpartikel handeln. Für ein noch nicht expandiertes Partikelschaummaterial bzw. entsprechende Partikelschaummaterialpartikel wie auch für ein vorexpandiertes Partikelschaummaterial bzw. entsprechende Partikelschaummaterialpartikel gilt, dass diese(s) typischerweise expandierbar ist bzw. sind, d. h. in einem Expansionsvorgang (weiter) expandiert werden können. Für ein vollständig expandiertes Partikelschaummaterial bzw. entsprechende Partikelschaummaterialpartikel gilt, dass diese(s) typischerweise nicht mehr (weiter) expandiert werden kann bzw. können.

Bei dem Partikelschaummaterial bzw. entsprechenden Partikelschaummaterialpartikeln handelt es sich insbesondere um ein Kunststoffpartikelschaummaterial bzw. um Kunststoffpartikelschaummaterialpartikel. Bei einem Kunststoffpartikelschaummaterial bzw. entsprechenden Kunststoffpartikelschaummaterialpartikeln kann es sich z. B. um expandiertes Polystyrol bzw. expandierbare oder expandierte Polystyrolpartikel handeln.

Die Verbundstruktur-Charakteristik des verfahrensgemäß herstellbaren bzw. hergestellten Verbundstrukturbauteils ergibt sich, wie im Folgenden näher erläutert, durch ein die Partikelschaumstruktur zumindest abschnittsweise, insbesondere vollständig, umgebendes Aufnahmeelement. Das Aufnahmeelement und die darin aufgenommene Partikelschaumstruktur bzw. deren Verbund bilden sonach die Verbundstruktur eines verfahrensgemäß herstellbaren bzw. hergestellten Verbundstrukturbauteils.

Das Verfahren umfasst die folgenden Schritte:
In einem ersten Schritt des Verfahrens erfolgt ein Bereitstellen wenigstens eines ein(en) mit wenigstens einem Partikelschaummaterial bzw. Partikelschaummaterialpartikeln befüllbaren Aufnahmeraum bzw. Aufnahmevolumen umfassenden umformbaren Aufnahmeelements. Das Aufnahmeelement weist typischerweise wenigstens eine Öffnung auf, über welche eine Befüllmöglichkeit zum Befüllen des Aufnahmeraums mit wenigstens einem Partikelschaummaterial bzw. Partikelschaummaterialpartikeln gegeben ist. Das Aufnahmeelement kann daher z. B. ein- oder beidseitig offen sein. Das Aufnahmeelement kann z. B. eine, insbesondere ein- oder mehrseitig offene, hüllenartige bzw. -förmige oder eine, insbesondere ein- oder mehrseitig offene, strumpf- oder schlauchartige bzw. -förmige geometrisch-konstruktive Gestalt aufweisen. Das Aufnahmeelement kann als zur Aufnahme von Partikelschaummaterial bzw. Partikelschaummaterialpartikeln eingerichtete Aufnahmehülle oder als zur Aufnahme von Partikelschaummaterial bzw. Partikelschaummaterialpartikeln eingerichteter Aufnahmestrumpf oder als zur Aufnahme von Partikelschaummaterial bzw. Partikelschaummaterialpartikeln eingerichteter Aufnahmeschlauch bezeichnet bzw. erachtet werden. Die konkrete Geometrie des Aufnahmeelements ist typischerweise im Hinblick auf eine jeweilig angestrebte Verwendung des herzustellenden Verbundstrukturbauteils zu wählen.

Die strukturellen Eigenschaften des Aufnahmeelements sind derart gewählt, dass dieses ein gewisses Umformvermögen, d. h. insbesondere ein gewisses Expansions- oder Kompressionsvermögen, aufweist. Das Aufnahmeelement lässt sich sonach durch Aufbringen einer ausreichend hohen Umformkraft in einem Umformvorgang von einer vor einem Umformvorgang gegebenen ersten Geometrie bzw. Raumform, insbesondere einer vor einem Umformvorgang gegebenen ersten Querschnittsgeometrie, in eine nach einem Umformvorgang gegebene zweite Geometrie bzw. Raumform, insbesondere eine nach einem Umformvorgang gegebene zweite Querschnittsgeometrie, umformen. Das Umformvermögen des Aufnahmeelements ist typischerweise durch gewisse elastisch-flexible Eigenschaften des Aufnahmeelements bzw. des das Aufnahmeelement bildenden Materials bedingt bzw. gegeben.

Die Bereitstellung des Aufnahmeelements kann manuell, d. h. z. B. über einen Anwender des Verfahrens, oder teil- bzw. vollautomatisch, d. h. z. B. vermittels einer Robotoreinrichtung, erfolgen. In allen Fällen kann die Bereitstellung des Aufnahmeelements auch eine Konfektionierung des Aufnahmeelements, insbesondere im Hinblick auf die Art und Menge des im Weiteren in dieses einzufüllenden Partikelschaummaterials bzw. der im Weiteren in dieses einzufüllenden Partikelschaummaterialpartikel, beinhalten. Eine Konfektionierung kann entsprechend insbesondere zweckmäßig sein, um ein Aufnahmeelement mit einem ein bestimmtes Aufnahmevolumen definierenden Aufnahmeraum bereitzustellen. Eine Konfektionierung kann insbesondere dann möglich, zweckmäßig oder notwendig sein, wenn das Aufnahmeelement durch entsprechende Konfektionierung aus einem Endlosmaterial herauszutrennen ist.

In einem auf den ersten Schritt folgenden zweiten Schritt des Verfahrens erfolgt ein Befüllen des Aufnahmeraums des Aufnahmeelements mit wenigstens einem Partikelschaummaterial bzw. Partikelschaummaterialpartikeln unter Ausbildung eines gesondert handhabbaren umformbaren Zwischenbauteils. In dem zweiten Schritt wird sonach in den Aufnahmeraum des Aufnahmeelements wenigstens ein Partikelschaummaterial bzw. Partikelschaummaterialpartikeln eingefüllt. Hierbei sind unterschiedliche Füllgrade, d. h. z. B. eine nur teilweise oder vollständige Füllung, des Aufnahmeraums des Aufnahmeelements mit dem wenigstens einen Partikelschaummaterial bzw. den Partikelschaummaterialpartikeln denkbar. Die Auswahl des Füllgrads erfolgt typischerweise im Hinblick auf angestrebte strukturelle Eigenschaften des jeweils herzustellenden Verbundstrukturbauteils. Durch das Einfüllen des wenigstens einen Partikelschaummaterials bzw. der Partikelschaummaterialpartikel in den Aufnahmeraum des Aufnahmeelements wird ein (aufgrund des Umformungsvermögens des Partikelschaummaterial bzw. der Partikelschaummaterialpartikel als auch des erwähnten Umformungsvermögens des Aufnahmeelements) umformbares Zwischenbauteil gebildet; das umformbare Zwischenbauteil liegt sonach nach dem Einfüllen des wenigstens einen Partikelschaummaterials bzw. der Partikelschaummaterialpartikel in das Aufnahmeelement als verfahrensgemäß herstellbares bzw. hergestelltes Zwischenprodukt vor.

Das Zwischenbauteil ist gesondert handhabbar. Das Zwischenbauteil kann sonach z. B. zwischen unterschiedlichen verfahrensgemäß verwendbaren bzw. verwendeten Stationen, d. h. z. B. Lager- oder Prozessstationen, transportiert werden. Das Zwischenbauteil kann jedoch, wie sich im Weiteren ergibt, auch (insgesamt) in ein Werkzeug - ein entsprechendes Werkzeug kann z. B. eine entsprechende Prozessstation bilden - eingelegt werden, in welchem weitere Schritte des Verfahrens durchgeführt werden.

Das Aufnahmeelement kann grundsätzlich mit allen Partikelschaummaterialien bzw. Partikelschaummaterialpartikeln, d. h. insbesondere allen Kunststoffpartikelschaummaterialien, befüllt werden. Ein Befüllen des Aufnahmeelements mit Mischungen, insbesondere chemisch und/oder physikalisch, unterschiedlicher Partikelschaummaterialien bzw. Partikelschaummaterialpartikel ist denkbar. Beispielsweise kann der Aufnahmeraum (wenigstens teilweise) mit nicht vorexpandierten Partikelschaummaterialien bzw. Partikelschaummaterialpartikeln und/oder (wenigstens teilweise) mit vorexpandierten Partikelschaummaterialien bzw. Partikelschaummaterialpartikeln und/oder (wenigstens teilweise) mit vollständig expandierten Partikelschaummaterialien bzw. Partikelschaummaterialpartikeln befüllt werden. Die in das Aufnahmeelement einzufüllenden bzw. eingefüllten Partikelschaummaterialien bzw. Partikelschaummaterialpartikel können bereits einer, insbesondere im Hinblick auf die im Weiteren verfahrensgemäß erfolgenden Maßnahmen zur Ausbildung des Verbundstrukturbauteils zweckmäßigen, vorbereitenden Vorbereitungsmaßnahme, d. h. z. B. einer Trocknungsmaßnahme, einer Vortemperierungsmaßnahme, etc., unterzogen worden sein. Entsprechende Vorbereitungsmaßnahmen können Bestandteile des Verfahrens bilden.

Das Befüllen des Aufnahmeelements kann manuell, d. h. z. B. über einen Anwender des Verfahrens, oder teil- bzw. vollautomatisch, d. h. z. B. vermittels einer Robotoreinrichtung, erfolgen. In allen Fällen kann der Schritt des Befüllens auch ein Verschließen der wenigstens einen Einfüllöffnung des Aufnahmeelements, d. h. ein zumindest teilweises, insbesondere vollständiges, Verschließen des befüllten Aufnahmeelements, beinhalten. Durch Verschließen des Aufnahmeelements kann ein in unterschiedlichen chemischen und/oder physikalischen Bedingungen, gegebenenfalls auch über längere Zeit, lagerbares oder transportierbares Zwischenbauteil gebildet werden. Ein Verschließen des Aufnahmeelements kann sonach insbesondere dann zweckmäßig oder notwendig sein, wenn das Aufnahmeelement zu lagern oder zu transportieren ist. Der Verschluss des Aufnahmeelements kann unlösbar oder (beschädigungs- bzw. zerstörungsfrei) aufhebbar bzw. lösbar sein.

Die Befüllung des Aufnahmeelements kann innerhalb einer, gegebenenfalls form- bzw. konturgebenden, Werkzeugkavität eines zur Durchführung des Verfahrens verwendeten Werkzeugs erfolgen. Die Werkzeugkavität ist/wird hierzu typischerweise zumindest teilweise, gegebenenfalls vollständig geöffnet. Dabei ist es grundsätzlich denkbar, dass das Aufnahmeelement eine einer form- bzw. konturgebenden Werkzeugkavität eines zur Durchführung des Verfahrens verwendeten Werkzeugs nachempfundene geometrisch-konstruktive Gestalt aufweist.

In auf den zweiten Schritt folgenden weiteren Schritten des Verfahrens erfolgt ein Durchführen wenigstens einer Maßnahme zum Verbinden des in dem Aufnahmeraum des Aufnahmeelements eingefüllten partikulären Partikelschaummaterials bzw. ein Durchführen wenigstens einer Maßnahme zum Verbinden der Partikelschaummaterialpartikel, d. h. wenigstens eine Maßnahme zum Überführen des Partikelschaummaterials bzw. der Partikelschaummaterialpartikel von einem vor dem Durchführen der wenigstens einen Maßnahme gegebenen nicht verbundenen partikulären Zustand in einen nach Durchführen der wenigstens einen Maßnahme gegebenen verbundenen nicht mehr partikulären Zustand, sowie ein Durchführen wenigstens einer Maßnahme zum Umformen des Zwischenbauteils, d. h. wenigstens eine Maßnahme zum Überführen des Zwischenbauteils von einer vor dem Durchführen der wenigstens einen Maßnahme gegebenen ersten Geometrie in eine nach dem Durchführen der wenigstens einen Maßnahme gegebenen, von der ersten Geometrie zumindest abschnittsweise, gegebenenfalls vollständig, verschiedenen zweiten Geometrie.

Das Durchführen der wenigstens einen Maßnahme zum Verbinden des in dem Aufnahmeraum des Aufnahmeelements eingefüllten Partikelschaummaterials bzw. der Partikelschaummaterialpartikel kann vor, nach oder gleichzeitig mit dem Durchführen der wenigstens einen Maßnahme zum Umformen des Zwischenbauteils erfolgen. Umgekehrt kann das Durchführen der wenigstens einen Maßnahme zum Umformen des Zwischenbauteils vor, nach oder gleichzeitig mit dem Durchführen der wenigstens einen Maßnahme zum Verbinden des in dem Aufnahmeraum des Aufnahmeelements eingefüllten Partikelschaummaterials bzw. der Partikelschaummaterialpartikel erfolgen.

Nach dem zweiten Schritt erfolgt sonach in einem, gegebenenfalls kombinierten, dritten Schritt, einerseits die Aufbringung einer ausreichend hohen Umformungsenergie bzw. -kraft, welche, insbesondere auch im Zusammenhang mit dem, gegebenenfalls gleichzeitig erfolgenden, Verbinden des Partikelschaummaterials bzw. der Partikelschaummaterialpartikel, in einer zumindest abschnittsweisen, gegebenenfalls vollständigen, Umformung bzw. Verformung des Zwischenbauteils von der ersten Geometrie bzw. Raumform in die zweite Geometrie bzw. Raumform resultiert, sowie andererseits die Aufbringung einer ausreichend hohen Verbindungsenergie bzw. -kraft, welche in einem Verbinden des Partikelschaummaterials bzw. der Partikelschaummaterialpartikel resultiert. Die wenigstens eine Maßnahme zum Umformen des Zwischenbauteils erfolgt typischerweise im Hinblick auf eine Endgeometrie des herzustellenden Verbundstrukturbauteils. Die zweite Geometrie bzw. Raumform des Zwischenbauteils kann sonach bereits der Endgeometrie des herzustellenden Verbundstrukturbauteils entsprechen.

Das Durchführen der wenigstens einen Maßnahme zum Verbinden des Partikelschaummaterials bzw. der Partikelschaummaterialpartikel und/oder das Durchführen der wenigstens einen Maßnahme zum Umformen des Zwischenbauteils kann mit einer Änderung des Umfangs des Aufnahmeelements von einer vor der jeweiligen Maßnahme gegebenen ersten Umfangsgeometrie, insbesondere vor der jeweiligen Maßnahme gegebenen ersten Umfangsabmessungen, in eine nach einer jeweiligen Maßnahme gegebene zweite Umfangsgeometrie, insbesondere nach der jeweiligen Maßnahme gegebene zweite Umfangsabmessungen, einhergehen. Unter dem Begriff "Umfangsabmessungen" ist insbesondere das querschnittlich betrachtete Umfangsmaß zu verstehen, welches sonach durch einen entsprechenden Umformvorgang geändert oder nicht geändert werden kann. Das Gesamtvolumen des Zwischenbauteils kann, je nach Änderung des Umfangs des Aufnahmeelements, sonach nicht verändert oder verändert werden.

An dieser Stelle ist allgemein zu erwähnen, dass ein Umformen des Zwischenbauteils mit einer Kompression des Zwischenbauteils in wenigstens einer Raumrichtung und/oder mit einer Expansion des Zwischenbauteils in wenigstens einer Raumrichtung einhergehen kann.

Unabhängig von dessen möglicher Änderung ist der Umfang des Aufnahmeelements typischerweise geschlossen, sodass das Partikelschaummaterial bzw. die nach Durchführung der wenigstens einen Maßnahme zum Verbinden des Partikelschaummaterials bzw. der Partikelschaummaterialpartikel vorliegende Partikelschaumstruktur unverlierbar in dem Aufnahmeelement aufgenommen ist. Das Aufnahmeelement kann sonach als "Außenhaut" des Verbundstrukturbauteils bezeichnet bzw. erachtet werden.

Die Ausbildung des herzustellenden Verbundstrukturbauteils erfolgt verfahrensgemäß sonach durch einen aufeinanderfolgend oder gleichzeitig erfolgenden Verbindungs- und Umformvorgang, d. h. ein aufeinanderfolgend oder gleichzeitig erfolgendes Verbinden des Partikelschaummaterials bzw. der Partikelschaummaterialpartikel und Umformen des Zwischenbauteils. Das Zwischenbauteil wird derart durch ein aufeinanderfolgend oder gleichzeitig erfolgendes Verbinden des Partikelschaummaterials bzw. der Partikelschaummaterialpartikel und Umformen in das herzustellende Verbundstrukturbauteil überführt. Das Verbinden des Partikelschaummaterials bzw. der Partikelschaummaterialpartikel kann das Umformen des Zwischenbauteils unterstützen oder sogar (vollständig) bedingen; die zum Umformen des Zwischenbauteils erforderliche Umformenergie kann sonach wenigstens teilweise, gegebenenfalls vollständig, durch das Verbinden des Partikelschaummaterials bzw. der Partikelschaummaterialpartikel bereitgestellt werden. Dies gilt insbesondere dann, wenn das Verbinden des Partikelschaummaterials bzw. der Partikelschaummaterialpartikel ein Expandieren eines expandierbaren Partikelschaummaterials bzw. expandierbarer Partikelschaummaterialpartikel beinhaltet.

Das Verfahren zeichnet sich insbesondere dadurch aus, dass ein Partikelschaummaterial bzw. Partikelschaummaterialpartikel unter Ausbildung eines Zwischenbauteils in ein entsprechendes Aufnahmeelement eingefüllt und innerhalb des Aufnahmeelements verbunden, d. h. von einem partikulären Zustand in einen nicht (mehr) partikulären Zustand überführt, wird. Es ist damit insbesondere nicht notwendig, das Partikelschaummaterial bzw. die Partikelschaummaterialpartikel (als solche(s)) in einem gesonderten Schritt in, wie eingangs erwähnt, aufwändiger Weise in ein Werkzeug einzufüllen.

Das Partikelschaummaterial bzw. die Partikelschaummaterialpartikel ist bzw. sind nach dem Durchführen der Maßnahme zum Verbinden typischerweise vollständig von dem Aufnahmeelement umgeben bzw. umschlossen. Das Partikelschaummaterial bzw. die Partikelschaummaterial füllt bzw füllen den Aufnahmeraum des Aufnahmeelements nach dem Durchführen der Maßnahme zum Verbinden sonach typischerweise vollständig aus. Der weiter oben erwähnte Füllgrad des Aufnahmeelements kann sonach insbesondere dahin gewählt werden, dass das Partikelschaummaterial bzw. die Partikelschaummaterialpartikel den Aufnahmeraum des Aufnahmeelements nach dem Durchführen der Maßnahme zum Verbinden vollständig ausfüllt. Das Verbinden des Partikelschaummaterials bzw. der Partikelschaummaterialpartikel kann gegebenenfalls sogar eine gewisse mechanische Spannung in das Aufnahmeelement einbringen; z. B. dann, wenn die (freie) Expansion eines expandierbaren Partikelschaummaterials bzw. expandierbarer Partikelschaummaterialpartikel zu einer Volumenvergrößerung des Partikelschaummaterials bzw. der Partikelschaummaterialpartikel über das ursprüngliche Aufnahmevolumen des Aufnahmeraums des Aufnahmeelements hinaus führt bzw. führen würde. Das Aufnahmeelement kann durch Expansion eines expandierbaren Partikelschaummaterials bzw. expandierbarer Partikelschaummaterialpartikel und aufgrund der damit verbundenen Volumenzunahme des expandierten Partikelschaummaterials bzw. der expandierten Partikelschaummaterialpartikel sonach gegebenenfalls zumindest abschnittsweise gespannt werden.

Das Durchführen der wenigstens einen Maßnahme zum Verbinden des Partikelschaummaterials bzw. der Partikelschaummaterialpartikel und/oder das Durchführen der wenigstens einen Maßnahme zum Umformen des Zwischenbauteils kann mit einer zumindest abschnittsweisen, insbesondere form- und/oder stoffschlüssigen, Verbindung des Partikelschaummaterials bzw. der Partikelschaummaterialpartikel mit dem Aufnahmeelement einhergehen. Mithin kann durch Ausbildung einer entsprechenden, insbesondere form- und/oder stoffschlüssigen, Verbindung zwischen dem Partikelschaummaterial bzw. den Partikelschaummaterialpartikeln und dem Aufnahmeelement ein besonders stabiler Verbund und somit ein besonders stabiles Verbundstrukturbauteil hergestellt werden.

Zur Ausbildung einer formschlüssigen Verbindung zwischen dem Partikelschaummaterial bzw. den Partikelschaummaterialpartikeln und dem Aufnahmeelement kann eine, insbesondere durch gegenseitiges Ein- bzw. Durchdringen bedingte, formschlüssige Befestigungsmöglichkeiten, d. h. z. B. Verankerungs- und/oder Verhakungsmöglichkeiten, bildende Struktur des Aufnahmeelements zweckmäßig oder notwendig sein. Eine entsprechende Struktur kann z. B. durch eine zumindest abschnittsweise, insbesondere vollständige, textile Ausführung des Aufnahmeelements gebildet sein.

Zur Ausbildung einer stoffschlüssigen Verbindung zwischen dem Partikelschaummaterial bzw. den Partikelschaummaterialpartikeln und dem Aufnahmeelement kann eine gewisse chemische Ähnlichkeit bzw. Verträglichkeit zwischen dem Partikelschaummaterial bzw. den Partikelschaummaterialpartikeln und dem das Aufnahmeelement bildenden Material zweckmäßig oder notwendig sein. Eine stoffschlüssige Verbindung kann insbesondere durch ein zumindest abschnittsweises Verkleben bzw. Verschmelzen bzw. Versintern des Partikelschaummaterials bzw. der Partikelschaummaterialpartikel mit dem das Aufnahmeelement bildenden Material gebildet sein.

Als Maßnahme zum Verbinden des Partikelschaummaterials bzw. der Partikelschaummaterialpartikel kommt ein, insbesondere dampffreies bzw. dampfloses, Beaufschlagen des Partikelschaummaterials bzw. der Partikelschaummaterialpartikel mit thermischer Energie (Wärme) in Betracht. Die thermische Energie kann zu einem zumindest abschnittsweisen Verkleben bzw. Verschmelzen bzw. Versintern des Partikelschaummaterials bzw. der Partikelschaummaterialpartikel führen. Die das Verbinden des Partikelschaummaterials bzw. der Partikelschaummaterialpartikel herbeiführende thermische Energie bzw. deren Übertragung auf das Partikelschaummaterial bzw. die Partikelschaummaterialpartikel kann unterschiedlicher Art sein. Prinzipiell kommen sowohl konduktive als auch konvektive Arten der Energieeinbringung und - übertragung in Betracht. Die Einbringung der thermischen Energie in das Partikelschaummaterial bzw. die Partikelschaummaterialpartikel kann z. B. über Energieübertragung von wenigstens einem temperierbaren bzw. temperierten Werkzeugwandungsabschnitt eines Werkzeugs erfolgen.

Das Verbinden des Partikelschaummaterials bzw. der Partikelschaummaterialpartikel kann sonach über einen dampffreien bzw. dampflosen Schäumvorgang erfolgen, welcher sowohl mit expandierbaren als auch mit vollständig expandierten Partikelschaummaterialpartikeln durchgeführt werden kann. Ein entsprechender dampffreier bzw. dampfloser Schäumvorgang kann durch Aufbringung von Druck bzw. einer Kompressionskraft unterstützt werden; die zu verbindenden Partikelschaummaterialpartikel können sonach durch Druck und Temperatur miteinander verbunden werden.

Alternativ oder ergänzend kann als Maßnahme zum Verbinden des Partikelschaummaterials bzw. der Partikelschaummaterialpartikel, ein Beaufschlagen des Partikelschaummaterials mit einem ein Verbinden des Partikelschaummaterials bzw. der Partikelschaummaterialpartikel, d. h. insbesondere eine Expansion eines expandierbaren Partikelschaummaterials bzw. expandierbarer Partikelschaummaterialpartikel, herbeiführenden Medium bzw. Expansionsmedium, beispielsweise Dampf bzw. Heißdampf, in Betracht. Eine entsprechende Maßnahme beinhaltet sonach typischerweise einen Expansionsvorgang eines expandierbaren Partikelschaummaterials bzw. expandierbarer Partikelschaummaterialpartikel.

Als weitere Maßnahme zum Verbinden des Partikelschaummaterials bzw. der Partikelschaummaterialpartikel kann ein Beaufschlagen des Partikelschaummaterials bzw. der Partikelschaummaterialpartikel mit einer ein Verbinden des Partikelschaummaterials bzw. der Partikelschaummaterialpartikel, d. h. insbesondere eine Expansion eines expandierbaren Partikelschaummaterials bzw. expandierbarer Partikelschaummaterialpartikel, herbeiführenden ausreichend energiereichen Strahlung bzw. Expansionsstrahlung erfolgen. Das Verbinden des Partikelschaummaterials bzw. der Partikelschaummaterialpartikel kann sonach durch Einbringen von Strahlungsenergie in das Partikelschaummaterial bzw. die Partikelschaummaterialpartikel herbeigeführt werden.

Das Durchführen der wenigstens einen Maßnahme zum Umformen des Zwischenbauteils und das Durchführen der wenigstens einen Maßnahme zum Verbinden des Partikelschaummaterials bzw. der Partikelschaummaterialpartikel kann nach Einbringen des Zwischenbauteils in eine durch wenigstens einen Werkzeugwandungsabschnitt definierte Werkzeugkavität eines Werkzeugs erfolgen. Das Zwischenbauteil kann sonach vor Durchführen der Maßnahme zum Umformen des umformbaren Zwischenbauteils und vor Durchführen der Maßnahme zum Verbinden des Partikelschaummaterials bzw. der Partikelschaummaterialpartikel in eine durch eine oder mehrere Werkzeugwandungsabschnitte begrenzte bzw. definierte Werkzeugkavität eines Werkzeugs eingebracht werden. Das Einbringen des Zwischenbauteils in die Werkzeugkavität eines Werkzeugs kann manuell, d. h. z. B. über einen Anwender des Verfahrens, oder teil- bzw. vollautomatisch, d. h. z. B. vermittels einer Robotoreinrichtung, erfolgen.

Zur Durchführung des Verfahrens kann sonach ein eine durch einen oder mehrere Werkzeugwandungsabschnitte begrenzte bzw. definierte Werkzeugkavität umfassendes Werkzeug verwendet werden, in welchem ein Verbinden des Partikelschaummaterials bzw. der Partikelschaummaterialpartikel als auch ein Umformen des Zwischenbauteils durchführbar ist bzw. durchgeführt wird. Das Werkzeug kann sonach als kombiniertes Verbindungs-Umform-Werkzeug bezeichnet bzw. erachtet werden. Das Volumen der Werkzeugkavität kann größer, (in etwa) gleich oder kleiner des Volumens des Zwischenbauteils sein, sodass das Zwischenbauteil entweder mit oder ohne Spiel in die Werkzeugkavität einbringbar ist. Bei entsprechendem Volumen der Werkzeugkavität können auch mehrere Zwischenbauteile in die Werkzeugkavität eingebracht werden.

Ein verfahrensgemäß verwendbares bzw. verwendetes Werkzeug kann einen oder mehrere eine formgebende Kontur aufweisende(n) erste(n) Werkzeugwandungsabschnitte umfassen, welche(r) relativ zu einem oder mehreren zweiten Werkzeugwandungsabschnitten bewegbar gelagert ist bzw. sind. Auch der oder die zweite(n) Werkzeugwandungsabschnitt(e) können eine formgebende Kontur aufweisen.

Das Durchführen der Maßnahme zum Umformen des Zwischenbauteils kann sonach durch eine Relativbewegung wenigstens eines ersten Werkzeugwandungsabschnitts relativ zu einem zweiten Werkzeugwandungsabschnitt unterstützt oder (vollständig) bedingt werden. Als Maßnahme zum Umformen des Zwischenbauteils kann sonach z. B. eine Relativbewegung wenigstens eines ersten Werkzeugwandungsabschnitts relativ zu einem zweiten Werkzeugwandungsabschnitt erfolgen. Die zum Umformen des Zwischenbauteils erforderliche Umformenergie kann sonach wenigstens teilweise, gegebenenfalls vollständig, durch eine entsprechende Bewegung wenigstens eines Werkzeugwandungsabschnitts relativ zu einem zweiten Werkzeugwandungsabschnitt bereitgestellt werden.

Eine entsprechende Relativbewegung stellt typischerweise eine Schließbewegung wenigstens eines Werkzeugwandungsabschnitts von einer Offenstellung des Werkzeugs, in welcher eine Zugangsmöglichkeit in die Werkzeugkavität geschaffen ist, in eine Schließstellung des Werkzeugs bzw. in Richtung einer Schließstellung des Werkzeugs, in welcher keine Zugangsmöglichkeit in die Werkzeugkavität geschaffen ist, dar. Bei einer entsprechenden Schließbewegung wird sonach typischerweise wenigstens ein erster Werkzeugwandungsabschnitt relativ zu wenigstens einem zweiten Werkzeugwandungsabschnitt bewegt, derart dass das Werkzeug in die Schließstellung bzw. in Richtung der Schließstellung überführt wird.

Das Verfahren kann kontinuierlich oder diskontinuierlich (batchweise) durchgeführt werden. Das Verfahren kann sonach als kontinuierlicher oder diskontinuierlicher Prozess implementiert werden. Die Implementierung des Verfahrens als kontinuierlicher Prozess kann insbesondere durch die erwähnte Automatisierbarkeit der Verfahrensschritte ermöglicht werden.

Das Aufnahmeelement kann aus einem gegenüber bestimmten, insbesondere gasförmigen, Medien undurchlässigen (nicht permeablen) oder durchlässigen (permeablen) Material gebildet sein. Im Rahmen des Verfahrens kann sonach ein gegenüber bestimmten, insbesondere gasförmigen, Medien undurchlässiges oder durchlässiges (permeables) Aufnahmeelement verwendet werden. Die Durchlässigkeit des Aufnahmeelements gegenüber bestimmten, insbesondere gasförmigen Medien, kann z. B. durch eine zumindest abschnittsweise Perforation des Aufnahmeelements erzeugt oder begünstigt werden. Die Wahl des Materials des Aufnahmeelements erfolgt sonach insbesondere im Hinblick auf die zum Verbinden des Partikelschaummaterials bzw. der Partikelschaummaterialpartikel durchgeführte Maßnahme, welche eine Durchlässigkeit des Aufnahmeelements gegenüber, insbesondere gasförmigen, Medien erfordern oder (gerade nicht) erfordern kann.

Konkret kann im Rahmen des Verfahrens ein aus wenigstens einem, insbesondere gelege-, gestrick-, gewebe- oder gewirkeartigen, natürlichen oder synthetischen Textilmaterial gebildetes Aufnahmeelement oder ein aus wenigstens einem, insbesondere Kohlenstoff-basierten, Kunststoffmaterial gebildetes Aufnahmeelement oder ein aus wenigstens einem, insbesondere blechartigen bzw. -förmigen oder geflechtartigen bzw. -förmigen, Metall gebildetes Aufnahmeelement verwendet werden. Die Wahl des Materials des Aufnahmeelements kann einerseits im Hinblick auf die im Rahmen des Umformens und Verbindens herrschenden Prozessbedingungen, d. h. insbesondere die herrschende Atmosphäre, den herrschenden Druck, die herrschende Temperatur, etc., und andererseits im Hinblick auf die angestrebte Verwendung sowie die damit typischerweise angestrebten Eigenschaften des herzustellenden Verbundstrukturbauteils erfolgen. Ein aus einem Textilmaterial gebildetes Aufnahmeelement kann insbesondere für die Herstellung von am Körper eines Menschen zu tragenden Verbundstrukturbauteilen, d. h. z. B. Verbundstrukturbauteilen in Form von am Körper eines Menschen zu tragenden Bändern, Ringen, Reifen, etc., zweckmäßig sein.

Im Rahmen des Verfahrens kann ein Aufnahmeelement verwendet werden, welches wenigstens eine bei Aufbringen einer bestimmten Umformenergie eine vorgegebene Geometrie einnehmende Umformstruktur aufweist. Das verwendete Aufnahmeelement kann sonach wenigstens eine bei Aufbringen einer bestimmten Umformenergie eine vorgegebene Geometrie einnehmende Umformstruktur aufweisen. Eine entsprechende Umformstruktur kann durch lokal unterschiedliche strukturelle Eigenschaften, d. h. insbesondere lokal unterschiedliche Umformeigenschaften, des Aufnahmeelements herbeigeführt werden. Entsprechende lokal unterschiedliche strukturelle Eigenschaften bzw. Umformungseigenschaften des Aufnahmeelements können beispielsweise durch lokal unterschiedliche mechanische Eigenschaften, d. h. insbesondere lokal unterschiedliche Festigkeiten, Steifigkeiten, etc., herbeiführende Maßnahmen, wie z. B. lokal unterschiedliche Materialstrukturen, d. h. z. B. lokale Schwächungs- oder Verstärkungsstrukturen, lokal unterschiedliche Wandstärken, etc., erzeugt sein bzw. werden. Für aus Textilmaterialien gebildete Aufnahmeelemente können lokal unterschiedliche Umformungseigenschaften beispielsweise durch lokal unterschiedliche Arten der Textilbindung, d. h. z. B. lokal unterschiedliche Gelege-, Gestrick-, Gewebe- oder Gewirkeeigenschaften, wie z. B. lokal unterschiedliche Maschendichte, Maschengröße, etc., sowie die gezielte Verwendung von Textilfasern unterschiedlicher mechanischer Eigenschaften, d. h. z. B. elastischer und nicht elastischer Textilfasern, erzeugt werden.

Die Erfindung betrifft neben dem Verfahren auch ein Verbundstrukturbauteil, welches gemäß dem hierin beschriebenen Verfahren, hergestellt ist bzw. wurde. Das Verbundstrukturbauteil kann z. B. eine bandartige bzw. -förmige Grundform beliebiger Querschnittsgeometrie aufweisen. Sämtliche Ausführungen im Zusammenhang mit dem Verfahren gelten analog für das Verbundstrukturbauteil. Das Verbundstrukturbauteil kann als typischerweise technisches Bauteil in einer Vielzahl an unterschiedlichen Anwendungs- bzw. Einsatzgebieten, d. h. insbesondere solchen Anwendungs- bzw. Einsatzgebieten, in welchen Partikelschaummaterialien bzw. aus diesen gebildete Partikelschaumstrukturen Anwendung bzw. Einsatz finden, verwendet werden.

Die Erfindung betrifft weiterhin eine Vorrichtung zur Herstellung eines eine ein Partikelschaummaterial umfassende Partikelschaumstruktur umfassenden Verbundstrukturbauteils. Die Vorrichtung ist insbesondere zur Durchführung des hierin beschriebenen Verfahrens eingerichtet. Sämtliche Ausführungen im Zusammenhang mit dem Verfahren gelten analog für die Vorrichtung.

Die Vorrichtung umfasst wenigstens eine Einrichtung, welche zum Durchführen wenigstens einer Maßnahme zum Umformen eines entsprechenden Zwischenbauteils von einer vor dem Durchführen der wenigstens einen Maßnahme gegebenen ersten Geometrie in eine nach dem Durchführen der wenigstens einen Maßnahme gegebenen, von der ersten Geometrie zumindest abschnittsweise, gegebenenfalls vollständig, verschiedenen zweiten Geometrie, und/oder zum Durchführen wenigstens einer Maßnahme zum Verbinden des in dem Aufnahmeraum des Aufnahmeelements eingefüllten Partikelschaummaterials bzw. wenigstens einer Maßnahme zum Verbinden der in dem Aufnahmeraum des Aufnahmeelements eingefüllten Partikelschaummaterialpartikel von einem vor dem Durchführen der Maßnahme gegebenen nicht verbundenen Zustand in einen nach Durchführen der Maßnahme gegebenen verbundenen Zustand eingerichtet ist.

Die Einrichtung kann als ein eine durch ein oder mehrere Werkzeugwandungsabschnitte begrenzte bzw. definierte Werkzeugkavität umfassendes Werkzeug ausgebildet sein oder ein solches umfassen. Das Werkzeug kann einen oder mehrere eine formgebende Kontur aufweisende(n) erste(n) Werkzeugwandungsabschnitt(e) umfassen, welche(r) relativ zu einem oder mehreren zweiten Werkzeugwandungsabschnitt(en) bewegbar gelagert ist bzw. sind. Es gelten die obigen Ausführungen im Zusammenhang mit dem Werkzeug analog. Einzelne, mehrere oder sämtliche Werkzeugwandungsabschnitte können, insbesondere im Bereich ihrer der Werkzeugkavität zugewandten Oberfläche, z. B. durch Vorsehen von von einem gasförmigen und/oder flüssigen Temperiermedium durchströmbaren Temperierkanälen bzw. durch Vorsehen von elektrischen Temperier- bzw.

Heizeinrichtungen, temperierbar ausgebildet sein. Einzelne, mehrere oder sämtliche Werkzeugwandungsabschnitte können mit einer Vielzahl an, typischerweise bohrungsartigen bzw. -förmigen, Öffnungen versehen sein, über welche ein Expansionsmedium, d. h. insbesondere Dampf bzw. Heißdampf, in die Werkzeugkavität einbringbar ist. Wie erwähnt, stellt die Einbringung von Dampf bzw. Heißdampf in die Werkzeugkavität eine mögliche Maßnahme zum Verbinden des Partikelschaummaterials bzw. der Partikelschaummaterialpartikel dar. Die Einrichtung kann neben einem entsprechenden Werkzeug auch eine das Werkzeug zumindest abschnittsweise, insbesondere vollständig, umgebende Dampfkammer umfassen, in welcher Dampf bzw. Heißdampf erzeugbar ist.

Die Einrichtung kann alternativ oder ergänzend auch als eine Strahlungserzeugungseinrichtung zum Erzeugen einer in das Partikelschaummaterial bzw. die Partikelschaummaterialpartikel zur Herbeiführung eines Verbindens einzubringenden ausreichend energiereichen Expansionsstrahlung, d. h. z. B. InfrarotStrahlung, Radiowellen-Strahlung oder UV-Strahlung, ausgebildet sein oder wenigstens eine solche umfassen.

Die Erfindung ist anhand von Ausführungsbeispielen in den Zeichnungen näher erläutert. Dabei zeigt:
- Fig. 1 - 5: jeweils eine Prinzipdarstellung eines Schritts eines Verfahrens zur Herstellung eines Verbundstrukturbauteils gemäß einem ersten Ausführungsbeispiel;
- Fig. 6 - 9: jeweils eine Prinzipdarstellung eines Schritts eines Verfahrens zur Herstellung eines Verbundstrukturbauteils gemäß einem weiteren Ausführungsbeispiel; und
- Fig. 10 - 14: jeweils eine Prinzipdarstellung eines Zwischenbauteils bzw. eines Verbundstrukturbauteils gemäß einem Ausführungsbeispiel.

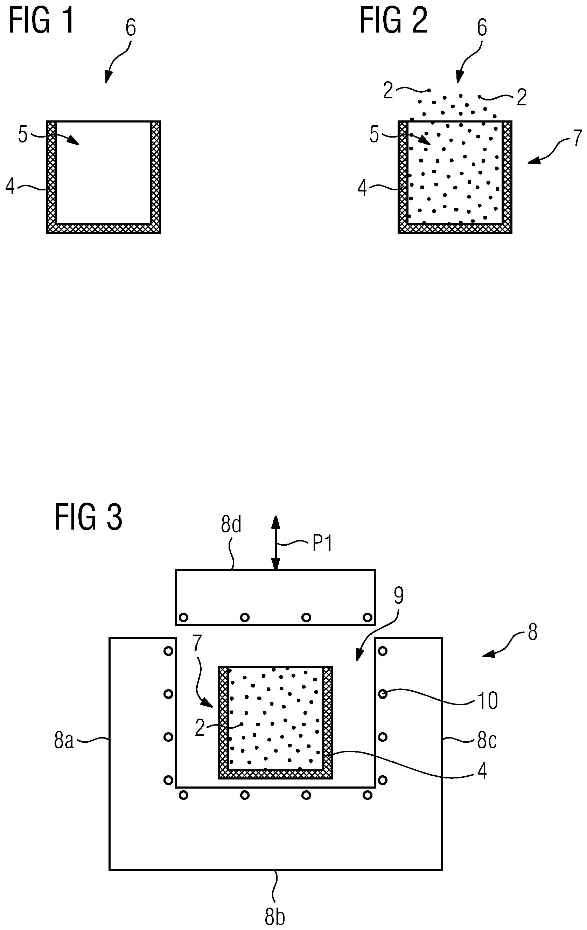

In den Fig. 1 - 5 ist jeweils eine Prinzipdarstellung eines Schritts eines Verfahrens zur Herstellung eines Verbundstrukturbauteils 1 gemäß einem ersten Ausführungsbeispiel gezeigt. Das Verfahren kann kontinuierlich oder diskontinuierlich (batchweise) durchgeführt werden.

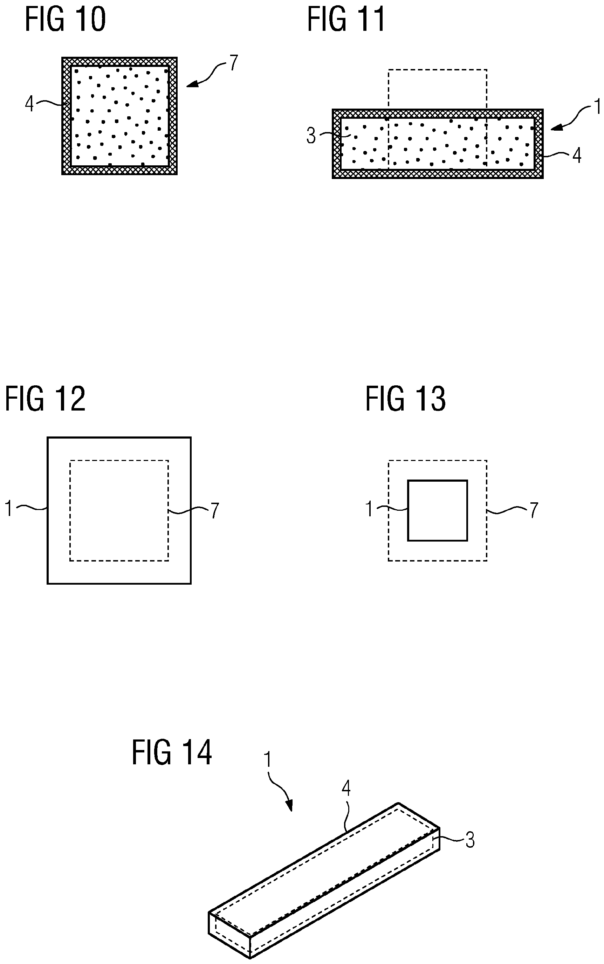

Das z. B. in Fig. 14 in einer perspektivischen Ansicht gezeigte, verfahrensgemäß herstellbare bzw. hergestellte Verbundstrukturbauteil 1 umfasst eine ein Partikelschaummaterial 2 umfassende Partikelschaumstruktur 3. Das Partikelschaummaterial 2 weist vor seiner Verarbeitung im Rahmen des Verfahrens eine partikuläre Struktur auf; das Partikelschaummaterial 2 liegt sonach vor seiner Verarbeitung im Rahmen des Verfahrens als Vielzahl an, insbesondere kugeligen, länglichen, d. h. insbesondere stäbchenartigen bzw. -förmigen, oder mahlgutartigen, Partikelschaummaterialpartikeln vor.

Bei dem Partikelschaummaterial 2 handelt es sich insbesondere um ein expandiertes Kunststoffpartikelschaummaterial, d. h. z. B. um expandiertes Polystyrol.

Bei dem Partikelschaummaterial 2 bzw. entsprechenden Partikelschaummaterialpartikeln handelt es sich in den in den Fig. gezeigten Ausführungsbeispielen typischerweise um ein vollständig expandiertes Partikelschaummaterial 2 bzw. vollständig expandierte Partikelschaummaterialpartikel. Für ein vollständig expandiertes Partikelschaummaterial 2 bzw. entsprechende Partikelschaummaterialpartikel gilt, dass diese(s) typischerweise nicht mehr expandiert werden kann bzw. können.

Es ist jedoch ebenso denkbar, dass es sich bei dem Partikelschaummaterial 2 bzw. entsprechenden Partikelschaummaterialpartikeln um ein noch nicht expandiertes Partikelschaummaterial 2 bzw. noch nicht expandierte Partikelschaummaterialpartikel oder um ein vorexpandiertes Partikelschaummaterial 2 bzw. vorexpandierte Partikelschaummaterialpartikel handelt. Für ein noch nicht expandiertes Partikelschaummaterial 2 bzw. entsprechende Partikelschaummaterialpartikel als auch für ein vorexpandiertes Partikelschaummaterial 2 bzw. entsprechende Partikelschaummaterialpartikel gilt, dass diese(s) typischerweise expandierbar ist bzw. sind, d. h. in einem Expansionsvorgang expandiert werden können.

Die Verbundstruktur-Charakteristik des Verbundstrukturbauteils 1 ergibt sich durch ein die Partikelschaumstruktur 3 zumindest abschnittsweise, insbesondere vollständig, umgebendes Aufnahmeelement 4. Das Aufnahmeelement 4 und die darin aufgenommene Partikelschaumstruktur 3 bzw. deren Verbund bilden sonach die Verbundstruktur des Verbundstrukturbauteils 1. Die Partikelschaumstruktur 3 kann stabil, insbesondere form- und/oder stoffschlüssig, mit dem Aufnahmeelement 4 verbunden sein.

Das Verfahren umfasst gemäß dem in den Fig. 1 - 5 gezeigten Ausführungsbeispiel die folgenden Schritte:
In dem in Fig. 1 gezeigten ersten Schritt erfolgt ein Bereitstellen wenigstens eines mit wenigstens einem Partikelschaummaterial 2 bzw. entsprechenden Partikelschaummaterialpartikeln befüllbaren Aufnahmeraum 5 bzw. Aufnahmevolumen umfassenden umformbaren Aufnahmeelements 4. Das Aufnahmeelement 4 weist wenigstens eine Öffnung 6 (Einfüllöffnung) auf, über welche eine Befüllmöglichkeit zum Befüllen des Aufnahmeraums 5 mit einem Partikelschaummaterial 2 bzw. entsprechenden Partikelschaummaterialpartikeln gegeben ist. Das Aufnahmeelement 4 kann daher z. B. ein- oder beidseitig offen sein; in dem in den Fig. 1 - 5 gezeigten Ausführungsbeispiel ist das Aufnahmeelement 4 beispielhaft einseitig offen.

Ersichtlich weist das in Fig. 1 in einer Seitenansicht dargestellte Aufnahmeelement 4 eine hüllenartige bzw. -förmige bzw. eine, insbesondere ein- oder mehrseitig offene, strumpf- oder schlauchartige bzw. -förmige geometrisch-konstruktive Gestalt auf. Das Aufnahmeelement 4 kann entsprechend als eine zur Aufnahme von Partikelschaummaterial 2 bzw. entsprechenden Partikelschaummaterialpartikeln eingerichtete Aufnahmehülle bezeichnet bzw. erachtet werden.

Die strukturellen Eigenschaften des Aufnahmeelements 4 sind derart gewählt, dass dieses ein gewisses Umformvermögen aufweist. Das Aufnahmeelement 4 lässt sich sonach durch Aufbringen einer ausreichend hohen Umformkraft in einem Umformvorgang von einer vor einem Umformvorgang gegebenen ersten Geometrie bzw. Raumform, insbesondere einer vor einem Umformvorgang gegebenen ersten Querschnittsgeometrie, in eine nach einem Umformvorgang gegebene zweite Geometrie bzw. Raumform, insbesondere eine nach einem Umformvorgang gegebene zweite Querschnittsgeometrie, umformen (vgl. hierzu Fig. 3, 4 sowie Fig. 10 - 13). Das Umformvermögen des Aufnahmeelements 4 ist typischerweise durch gewisse elastisch-flexible Eigenschaften des Aufnahmeelements 4 bzw. des das Aufnahmeelement 4 bildenden Materials bedingt bzw. gegeben.

Das Aufnahmeelement 4 kann aus einem gegenüber bestimmten, insbesondere gasförmigen, Medien undurchlässigen (nicht permeablen) oder durchlässigen (permeablen) Material gebildet sein. Die Durchlässigkeit des Aufnahmeelements 4 gegenüber bestimmten, insbesondere gasförmigen Medien, kann z. B. durch eine zumindest abschnittsweise Perforation des Aufnahmeelements 4 erzeugt oder begünstigt werden.

Konkret kann das Aufnahmeelement 4 aus wenigstens einem, insbesondere gelege-, gestrick-, gewebe- oder gewirkeartigen, natürlichen oder synthetischen Textilmaterial oder aus einem, insbesondere Kohlenstoff-basierten, Kunststoffmaterial oder aus einem, insbesondere blechartigen bzw. -förmigen oder geflechtartigen bzw. -förmigen, Metall gebildet sein. Ein aus einem Textilmaterial gebildetes Aufnahmeelement 4 kann insbesondere für die Herstellung von am Körper eines Menschen zu tragenden Verbundstrukturbauteilen 1, d. h. z. B. Verbundstrukturbauteilen 1 in Form von am Körper eines Menschen zu tragenden Bändern, Ringen, Reifen, etc., zweckmäßig sein.

Die Bereitstellung des Aufnahmeelements 4 kann manuell, d. h. z. B. über einen Anwender des Verfahrens, oder teil- bzw. vollautomatisch, d. h. z. B. vermittels einer Robotoreinrichtung, erfolgen. In allen Fällen kann die Bereitstellung des Aufnahmeelements 4 auch eine Konfektionierung des Aufnahmeelements 4, insbesondere im Hinblick auf die Art und Menge des im Weiteren in dieses einzufüllenden Partikelschaummaterials 2 bzw. der Partikelschaummaterialpartikel, beinhalten. Eine Konfektionierung kann entsprechend insbesondere dann zweckmäßig sein, um ein Aufnahmeelement 4 mit einem ein bestimmtes Aufnahmevolumen definierenden Aufnahmeraum 5 bereitzustellen. Eine Konfektionierung kann insbesondere dann möglich, zweckmäßig oder notwendig sein, wenn das Aufnahmeelement 4 durch entsprechende Konfektionierung aus einem Endlosmaterial herauszutrennen ist.

In dem in Fig. 2 gezeigten auf den ersten Schritt folgenden zweiten Schritt erfolgt ein Befüllen des Aufnahmeraums 5 des Aufnahmeelements 4 mit einem Partikelschaummaterial 2 bzw. Partikelschaummaterialpartikeln unter Ausbildung eines gesondert handhabbaren umformbaren Zwischenbauteils 7. Das Befüllen des Aufnahmeraums 5 des Aufnahmeelements 4 mit dem Partikelschaummaterial 2 bzw. den Partikelschaummaterialpartikeln erfolgt über die Öffnung 6. Es sind unterschiedliche Füllgrade, d. h. z. B. eine nur teilweise oder vollständige Füllung, des Aufnahmeraums 5 des Aufnahmeelements 4 mit dem Partikelschaummaterial 2 bzw. den Partikelschaummaterialpartikeln denkbar. Die Auswahl des Füllgrads erfolgt typischerweise im Hinblick auf angestrebte strukturelle Eigenschaften des herzustellenden Verbundstrukturbauteils 1. Durch das Einfüllen des Partikelschaummaterials 2 bzw. der Partikelschaummaterialpartikel in den Aufnahmeraum 5 des Aufnahmeelements 4 wird das (aufgrund des Umformungsvermögens des Partikelschaummaterial 2 bzw. der Partikelschaummaterialpartikel als auch des erwähnten Umformungsvermögens des Aufnahmeelements 4) umformbare Zwischenbauteil 7 gebildet, welches sonach als verfahrensgemäß herstellbares bzw. hergestelltes Zwischenprodukt vorliegt.

Das Zwischenbauteil 7 ist, wie erwähnt, gesondert handhabbar. Das Zwischenbauteil 7 kann sonach z. B. zwischen unterschiedlichen verfahrensgemäß verwendbaren bzw. verwendeten Stationen, d. h. z. B. Lager- oder Prozessstationen, transportiert werden. Das Zwischenbauteil 7 kann jedoch, wie sich im Weiteren im Zusammenhang mit den Fig. 3 - 5 ergibt, auch (insgesamt) in ein Werkzeug 8 - ein entsprechendes Werkzeug 8 kann z. B. eine entsprechende Prozessstation bilden - eingelegt werden, in welchem weitere Schritte des Verfahrens durchgeführt werden.

Das Befüllen des Aufnahmeraums 5 des Aufnahmeelements 4 kann manuell, d. h. z. B. über einen Anwender des Verfahrens, oder teil- bzw. vollautomatisch, d. h. z. B. vermittels einer Robotoreinrichtung, erfolgen. In allen Fällen kann der Schritt des Befüllens auch ein Verschließen der Öffnung 6 des Aufnahmeelements 4, d. h. ein Verschließen des befüllten Aufnahmeelements 4, beinhalten. Durch Verschließen des Aufnahmeelements 4 kann ein in unterschiedlichen chemischen und/oder physikalischen Bedingungen, gegebenenfalls auch über längere Zeit, lagerbares oder transportierbares Zwischenbauteil 7 gebildet werden. Ein Verschließen des Aufnahmeelements 4 kann insbesondere dann zweckmäßig oder notwendig sein, wenn das Aufnahmeelement 4 zu lagern oder zu transportieren ist. Der Verschluss des Aufnahmeelements 4 kann unlösbar oder (beschädigungs- bzw. zerstörungsfrei) aufhebbar bzw. lösbar sein.

In dem in den Fig. 1 - 5 gezeigten Ausführungsbeispiel wird das Zwischenbauteil 7 nach dem zweiten Schritt in eine durch Werkzeugwandungsabschnitte 8a - 8d begrenzte bzw. definierte Werkzeugkavität 9 eines Werkzeugs 8 eingebracht (vgl. Fig. 3). Bei den Werkzeugwandungsabschnitten 8a, 8c handelt es sich jeweils um eine die Werkzeugkavität 9 seitlich begrenzende Seitenwandung, bei dem Werkzeugwandungsabschnitt 8b um eine die Werkzeugkavität 9 bodenseitig begrenzende Bodenwandung und bei dem Werkzeugwandungsabschnitt 8d um eine die Werkzeugkavität 9 deckenseitig begrenzende Deckenwandung. Wenigstens ein Werkzeugwandungsabschnitt 8a - 8d weist eine formgebende Kontur auf.

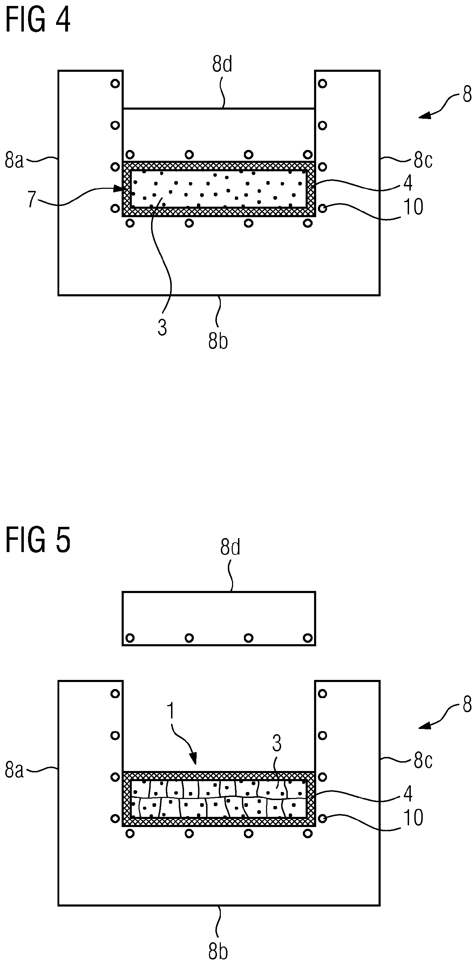

Wie durch den Doppelpfeil P1 angedeutet, ist der Werkzeugwandungsabschnitt 8d relativ zu den übrigen Werkzeugwandungsabschnitten 8a - 8c bewegbar gelagert. Durch eine Relativbewegung des Werkzeugwandungsabschnitts 8d relativ zu den übrigen Werkzeugwandungsabschnitten 8a - 8c ist die Überführung des Werkzeugs 8 von einer in Fig. 3 gezeigten Offenstellung, in welcher eine Zugangsmöglichkeit in die Werkzeugkavität 9 geschaffen ist, in eine in Fig. 4 gezeigte Schließstellung, in welcher keine Zugangsmöglichkeit in die Werkzeugkavität 9 geschaffen ist, möglich. Eine entsprechende Relativbewegung stellt sonach z. B. eine Schließbewegung des Werkzeugwandungsabschnitts 8d von der Offenstellung in die Schließstellung bzw. in Richtung der Schließstellung dar.

Das Einbringen des Zwischenbauteils 7 in die Werkzeugkavität 9 des Werkzeugs 8 kann manuell, d. h. z. B. über einen Anwender des Verfahrens, oder teil- bzw. vollautomatisch, d. h. z. B. vermittels einer Robotoreinrichtung, erfolgen.

In auf den zweiten Schritt folgenden in den Fig. 3, 4 gezeigten weiteren Schritten des Verfahrens erfolgt ein Durchführen einer Maßnahme zum Verbinden des in dem Aufnahmeraum 5 des Aufnahmeelements 4 eingefüllten Partikelschaummaterials 2 bzw. der Partikelschaummaterialpartikel, d. h. eine Maßnahme zum Überführen des Partikelschaummaterials 2 von einem vor dem Durchführen der Maßnahme gegebenen nicht verbundenen bzw partikulären Zustand in einen nach Durchführen der Maßnahme gegebenen verbundenen bzw. nicht mehr partikulären expandierten Zustand, sowie ein Durchführen einer Maßnahme zum Umformen des Zwischenbauteils 7, d. h. eine Maßnahme zum Überführen des Zwischenbauteils 7 von einer vor dem Durchführen der Maßnahme gegebenen ersten Geometrie in eine nach dem Durchführen der Maßnahme gegebenen, von der ersten Geometrie zumindest abschnittsweise, gegebenenfalls vollständig, verschiedenen zweiten Geometrie.

Das Durchführen der Maßnahme zum Verbinden des in dem Aufnahmeraum 5 des Aufnahmeelements 4 eingefüllten Partikelschaummaterials 2 bzw. der Partikelschaummaterialpartikel kann vor, nach oder gleichzeitig mit dem Durchführen der Maßnahme zum Umformen des Zwischenbauteils 7 erfolgen. Umgekehrt kann das Durchführen der Maßnahme zum Umformen des Zwischenbauteils 7 vor, nach oder gleichzeitig mit dem Durchführen der Maßnahme zum Verbinden des in dem Aufnahmeraum 5 des Aufnahmeelements 4 eingefüllten expandierbaren Partikelschaummaterials 2 bzw. der Partikelschaummaterialpartikel erfolgen.

Es erfolgt sonach in einem, gegebenenfalls kombinierten, dritten Schritt, einerseits die Aufbringung einer ausreichend hohen Umformungsenergie bzw. -kraft, welche, insbesondere auch im Zusammenhang mit dem, gegebenenfalls gleichzeitig erfolgenden, Verbinden des Partikelschaummaterials 2 bzw. der Partikelschaummaterialpartikel, in einer zumindest abschnittsweisen, gegebenenfalls vollständigen, Umformung bzw. Verformung des Zwischenbauteils 7 von der ersten Geometrie bzw. Raumform in die zweite Geometrie bzw. Raumform resultiert, sowie andererseits die Aufbringung einer ausreichend hohen Verbindungsenergie bzw. - kraft, welche in einem Verbinden des Partikelschaummaterials 2 bzw. der Partikelschaummaterialpartikel resultiert. Die Maßnahme zum Umformen des Zwischenbauteils 7 erfolgt typischerweise im Hinblick auf eine Endgeometrie des herzustellenden Verbundstrukturbauteils 1. Die zweite Geometrie bzw. Raumform des Zwischenbauteils 7 kann sonach bereits der Endgeometrie des herzustellenden Verbundstrukturbauteils 1 entsprechen.

Die Ausbildung des herzustellenden Verbundstrukturbauteils 1 erfolgt verfahrensgemäß sonach durch einen aufeinanderfolgend oder gleichzeitig erfolgenden Verbindungs- und Umformvorgang, d. h. ein aufeinanderfolgend oder gleichzeitig erfolgendes Verbinden des Partikelschaummaterials 2 bzw. der Partikelschaummaterialpartikel und Umformen des Zwischenbauteils 7. Das Zwischenbauteil 7 wird derart durch ein aufeinanderfolgend oder gleichzeitig erfolgendes Verbinden des Partikelschaummaterials 2 bzw. der Partikelschaummaterialpartikel und Umformen in das herzustellende Verbundstrukturbauteil 1 überführt.

In dem in den Fig. 1 - 5 gezeigten Ausführungsbeispiel erfolgt als Maßnahme zum Verbinden des Partikelschaummaterials 2 bzw. der Partikelschaummaterialpartikel ein dampffreies bzw. dampfloses Beaufschlagen des Partikelschaummaterials 2 bzw. der Partikelschaummaterialpartikel mit thermischer Energie (Wärme). Die thermische Energie führt zu einem zumindest abschnittsweisen Verkleben bzw. Verschmelzen bzw. Versintern des Partikelschaummaterials 2 bzw. der Partikelschaummaterialpartikel. Die Einbringung der thermischen Energie in das Partikelschaummaterial 2 bzw. die Partikelschaummaterialpartikel erfolgt über Energieübertragung von wenigstens einem temperierbaren bzw. temperierten Werkzeugwandungsabschnitt 8a - 8d des Werkzeugs 8. Die das Verbinden des Partikelschaummaterials 2 bzw. der Partikelschaummaterialpartikel herbeiführende thermische Energie bzw. deren Übertragung auf das Partikelschaummaterial 2 bzw. die Partikelschaummaterialpartikel kann unterschiedlicher Art sein. Prinzipiell kommen sowohl konduktive als auch konvektive Arten der Energieeinbringung und - übertragung in Betracht. Das Verbinden des Partikelschaummaterials 2 bzw. der Partikelschaummaterialpartikel erfolgt sonach über einen dampffreien bzw. dampflosen Schäumvorgang. Der dampffreie bzw. dampflose Schäumvorgang kann durch Aufbringung von Druck - der Druck kann über eine Druck erzeugende Bewegung wenigstens eines Werkzeugwandungsabschnitts 8a - 8d erzeugt werden - unterstützt werden; die zu verbindenden Partikelschaummaterialpartikel können sonach durch Druck und Temperatur miteinander verbunden werden.

Als Maßnahme zum Verbinden des Partikelschaummaterials 2 bzw. der Partikelschaummaterialpartikel wäre unter der Voraussetzung, dass das Partikelschaummaterial 2 bzw. die Partikelschaummaterialpartikel expandierbar ist bzw. sind, auch ein Expandieren des Partikelschaummaterials 2 bzw. der Partikelschaummaterialpartikel durch ein Beaufschlagen des Partikelschaummaterials 2 bzw. der Partikelschaummaterialpartikel mit einem eine Expansion des expandierbaren Partikelschaummaterials 2 bzw. der expandierbaren Partikelschaummaterialpartikel herbeiführenden Expansionsmedium, d. h. Dampf bzw. Heißdampf, denkbar. Das Expandieren des Partikelschaummaterials 2 bzw. der Partikelschaummaterialpartikel könnte sonach auch durch Einbringen von thermischer Energie in das expandiere Partikelschaummaterial 2 vermittels des Expansionsmediums herbeigeführt werden.

Das gegebenenfalls erforderliche Expansionsmedium würde in diesem Fall, wie in Fig. 4 durch die Pfeile angedeutet, über in den Werkzeugwandungsabschnitten 8a - 8d optional vorhandene, typischerweise bohrungsartige bzw. -förmige, Öffnungen 10, über welche das Expansionsmedium in die Werkzeugkavität 9 einbringbar ist, in die Werkzeugkavität 9 eingebracht.

Das Umformen des Zwischenbauteils 7 erfolgt in dem in Fig. 1 - 5 gezeigten Ausführungsbeispiel durch Überführen des Werkzeugs 8 von der Offenstellung in die Schließstellung bzw. in Richtung der Schließstellung. Das Zwischenbauteil 7 wird derart umgeformt. Das Überführen des Werkzeugs 8 von der Offenstellung in die Schließstellung bzw. in Richtung der Schließstellung kann gleichermaßen der im Zusammenhang mit dem dampffreien bzw. dampflosen Schäumvorgang erwähnte Druck erzeugt werden.

Nach Durchführen des Expandierens und Umformens erfolgt, wie in Fig. 5 gezeigt, ein Öffnen des Werkzeugs 8 sowie eine Entnahme des derart hergestellten Verbundstrukturbauteils 1 aus der Werkzeugkavität 9 des Werkzeugs 8. Das Entnehmen des Verbundstrukturbauteils 1 aus der Werkzeugkavität 9 des Werkzeugs 8 kann wiederum manuell, d. h. z. B. über einen Anwender des Verfahrens, oder teil- bzw. vollautomatisch, d. h. z. B. vermittels einer Robotoreinrichtung, erfolgen.

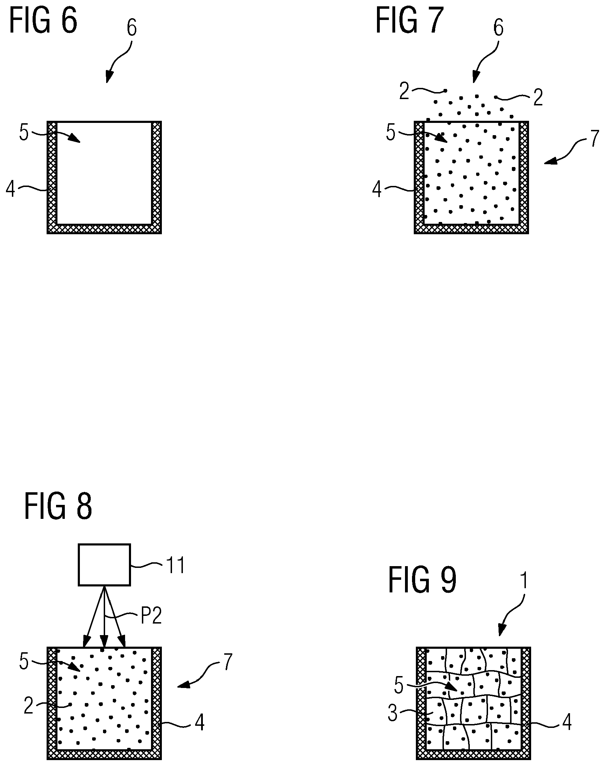

In den Fig. 6 - 9 ist jeweils eine Prinzipdarstellung eines Schritts eines Verfahrens zur Herstellung eines Verbundstrukturbauteils 1 gemäß einem weiteren Ausführungsbeispiel gezeigt. Das Verfahren kann kontinuierlich oder diskontinuierlich (batchweise) durchgeführt werden.

Die im Zusammenhang mit den in den Fig. 1, 2 des ersten Ausführungsbeispiels erläuterten Schritte sind identisch mit den in den Fig. 6, 7 gezeigten Schritten des weiteren Ausführungsbeispiels; d. h. auch in dem weiteren Ausführungsbeispiel erfolgt zunächst ein Bereitstellen eines Aufnahmeelements 4 (vgl. Fig. 6) sowie ein Befüllen des Aufnahmeraums des Aufnahmeelements 4 mit Partikelschaummaterial 2 bzw. Partikelschaummaterialpartikeln (vgl. Fig. 7).

Als Maßnahme zum Verbinden des Partikelschaummaterials 2 erfolgt in dem weiteren Ausführungsbeispiel jedoch ein Beaufschlagen des Partikelschaummaterials 2 mit einer energiereichen Strahlung bzw. Expansionsstrahlung, d. h. z. B. Infratot-Strahlung, Radiowellen-Strahlung oder UV-Strahlung. Das Verbinden des Partikelschaummaterials 2 bzw. der Partikelschaummaterialpartikel wird sonach durch Einbringen von thermischer Energie in das expandierte Partikelschaummaterial 2 vermittels der Strahlung herbeigeführt. Die Strahlung wird über eine Strahlungserzeugungseinrichtung 11 zum Erzeugen einer in das Partikelschaummaterial 2 bzw. die Partikelschaummaterialpartikel zur Herbeiführung eines Verbindens einzubringenden energiereichen Strahlung bereitgestellt.

Ersichtlich ist das bzw. ein Werkzeug 8 bei dem weiteren Ausführungsbeispiel weder zum Verbinden des Partikelschaummaterials 2 bzw. der Partikelschaummaterialpartikel noch zum Umformen des Zwischenbauteils 7 zwingend erforderlich.

Die Fig. 10 - 13 zeigen beispielhaft und grundsätzlich unabhängig von den in den Fig. 1 - 5 sowie 6 - 9 gezeigten Ausführungsbeispielen mögliche Arten der Umformung des Zwischenbauteils 7. Das Zwischenbauteil 7 ist in den Fig. 10 - 13 jeweils in einer quergeschnittenen Ansicht gezeigt.

Fig. 10 zeigt das Zwischenbauteil 7 vor dem Umformen, während die Fig. 11 - 13 das Zwischenbauteil 7 jeweils nach einem Umformen zeigen. Anhand eines Vergleichs der Fig. 10 mit den Fig. 10 - 13 ist ersichtlich, dass ein Umformen mit einer Kompression des Zwischenbauteils 7 in wenigstens einer Raumrichtung und/oder mit einer Expansion des Zwischenbauteils 7 in wenigstens einer Raumrichtung einhergehen kann. Der jeweils nicht umgeformte Zustand des Zwischenbauteils 7 ist in den Fig. 10 - 13 jeweils gestrichelt dargestellt.

Das in Fig. 11 gezeigte Zwischenbauteil 7 wurde in einer ersten Raumrichtung (z. B. vertikale Raumrichtung) komprimiert und in einer zweiten Raumrichtung (z. B. horizontale Raumrichtung) expandiert. Das Volumen des Zwischenbauteils 7 wurde durch das Umformen nicht verändert.

Das in Fig. 12 gezeigte Zwischenbauteil 7 wurde in zwei Raumrichtungen (vertikale und horizontale Raumrichtung) komprimiert. Das Volumen des Zwischenbauteils 7 wurde durch das Umformen verändert (Volumenabnahme).

Das in Fig. 13 gezeigte Zwischenbauteil 7 wurde in zwei Raumrichtungen (vertikale und horizontale Raumrichtung) expandiert. Das Volumen des Zwischenbauteils 7 wurde durch das Umformen verändert (Volumenzunahme).

Anhand der Fig. 10 - 13 ist sonach ersichtlich, dass das Durchführen der Maßnahme zum Verbinden des Partikelschaummaterials 2 bzw. der Partikelschaummaterialpartikel und/oder das Durchführen der Maßnahme zum Umformen des Zwischenbauteils 7 mit einer Änderung des Umfangs des Aufnahmeelements 4 bzw. des Zwischenbauteils 7 von einer vor der jeweiligen Maßnahme gegebenen ersten Umfangsgeometrie, insbesondere ersten Umfangsabmessungen, in eine nach einer jeweiligen Maßnahme gegebene zweite Umfangsgeometrie, insbesondere zweite Umfangsabmessungen, einhergehen kann. Das Gesamtvolumen des Zwischenbauteils 7 kann, je nach Änderung des Umfangs des Aufnahmeelements 4, sonach nicht verändert werden (vgl. Fig. 11) oder verändert werden (vgl. Fig. 12, 13).

Unabhängig von dessen möglicher Änderung ist der Umfang des Aufnahmeelements 4 in allen Ausführungsbeispielen geschlossen, sodass das Partikelschaummaterial 2 bzw. Partikelschaummaterialpartikel bzw. die daraus gebildete Partikelschaumstruktur 3 unverlierbar in dem Aufnahmeelement 2 aufgenommen ist. Das Aufnahmeelement 4 kann sonach als "Außenhaut" des Verbundstrukturbauteils 1 bezeichnet bzw. erachtet werden.

Anhand der Fig. 10 - 13 ist weiter ersichtlich, dass das Durchführen der Maßnahme zum Verbinden des Partikelschaummaterials 2 bzw. der Partikelschaummaterialpartikel und/oder das Durchführen der Maßnahme zum Umformen des Zwischenbauteils 7 mit einer zumindest abschnittsweisen, insbesondere form- und/oder stoffschlüssigen, Verbindung des Partikelschaummaterials 2 bzw. der Partikelschaummaterialpartikel mit dem Aufnahmeelement 4 einhergehen kann.

Zur Ausbildung einer formschlüssigen Verbindung zwischen dem Partikelschaummaterial 2 bzw. den Partikelschaummaterialpartikeln und dem Aufnahmeelement 4 kann eine, insbesondere durch gegenseitiges Ein- bzw. Durchdringen bedingte, formschlüssige Befestigungsmöglichkeiten, d. h. z. B. Verankerungs- und/oder Verhakungsmöglichkeiten, bildende Struktur des Aufnahmeelements 4 zweckmäßig oder notwendig sein. Eine entsprechende Struktur kann z. B. durch eine textile Ausführung des Aufnahmeelements 4 gebildet sein.

Zur Ausbildung einer stoffschlüssigen Verbindung zwischen dem Partikelschaummaterial 2 bzw. den Partikelschaummaterialpartikeln und dem Aufnahmeelement 4 kann eine gewisse chemische Ähnlichkeit bzw. Verträglichkeit zwischen dem Partikelschaummaterial 2 bzw. den Partikelschaummaterialpartikeln und dem das Aufnahmeelement 4 bildenden Material zweckmäßig oder notwendig sein. Eine stoffschlüssige Verbindung kann insbesondere durch ein zumindest abschnittsweises Verkleben, Verschmelzen oder Versintern des Partikelschaummaterials 2 mit dem das Aufnahmeelement 4 bildenden Material gebildet sein.

Fig. 14 zeigt ein Ausführungsbeispiel eines gemäß einem Ausführungsbeispiel des Verfahrens, d. h. z. B. gemäß dem in den Fig. 1 - 5 gezeigten Ausführungsbeispiel oder gemäß dem in den Fig. 6 - 9 gezeigten Ausführungsbeispiel, hergestellten Verbundstrukturbauteils 1 in einer perspektivischen Ansicht. Das Verbundstrukturbauteil 1 gemäß dem in Fig. 14 gezeigten Ausführungsbeispiel weist eine längliche bandartige bzw. -förmige Grundform auf.

Das im Zusammenhang mit den in den Fig. 1 - 5 sowie in den Fig. 6 - 9 gezeigten Ausführungsbeispielen erläuterte Verfahren kann mit einer Vorrichtung zur Herstellung eines Verbundstrukturbauteils 1 durchgeführt werden. Die Vorrichtung ist sonach zur Durchführung des erläuterten Verfahrens eingerichtet.

Die Vorrichtung umfasst wenigstens eine Einrichtung, welche zum Durchführen wenigstens einer Maßnahme zum Umformen eines entsprechenden Zwischenbauteils 7 von einer vor dem Durchführen der wenigstens einen Maßnahme gegebenen ersten Geometrie in eine nach dem Durchführen der wenigstens einen Maßnahme gegebenen, von der ersten Geometrie zumindest abschnittsweise, gegebenenfalls vollständig, verschiedenen zweiten Geometrie, und/oder zum Durchführen wenigstens einer Maßnahme zum Verbinden des in dem Aufnahmeraum 5 des Aufnahmeelements 4 eingefüllten Partikelschaummaterials 2 bzw. entsprechender Partikelschaummaterialpartikel von einem vor dem Durchführen der Maßnahme gegebenen nicht verbundenen partikulären Zustand in einen nach Durchführen der Maßnahme gegebenen verbundenen nicht partikulären Zustand eingerichtet ist.

Die Einrichtung kann, wie in dem in den Fig. 1 - 5 gezeigten Ausführungsbeispiel, als ein eine durch ein oder mehrere Werkzeugwandungsabschnitte 8a - 8d definierte Werkzeugkavität 9 umfassendes Werkzeug 8 ausgebildet sein oder ein solches umfassen.

Die Einrichtung kann, wie in dem in den Fig. 6 - 9 gezeigten Ausführungsbeispiel, als eine Strahlungserzeugungseinrichtung 11 ausgebildet sein oder eine solche umfassen.

Schließlich gilt für alle Ausführungsbeispiele, dass im Rahmen des Verfahrens ein Aufnahmeelement 4 verwendet werden kann, welches wenigstens eine bei Aufbringen einer bestimmten Umformenergie eine vorgegebene Geometrie einnehmende Umformstruktur aufweist. Das verwendete Aufnahmeelement 4 kann sonach wenigstens eine bei Aufbringen einer bestimmten Umformenergie eine vorgegebene Geometrie einnehmende Umformstruktur aufweisen. Eine entsprechende Umformstruktur kann durch lokal unterschiedliche strukturelle Eigenschaften, d. h. insbesondere lokal unterschiedliche Umformeigenschaften, des Aufnahmeelements 4 herbeigeführt werden. Entsprechende lokal unterschiedliche strukturelle Eigenschaften bzw. Umformungseigenschaften des Aufnahmeelements 4 können beispielsweise durch lokal unterschiedliche mechanische Eigenschaften, d. h. insbesondere lokal unterschiedliche Festigkeiten, Steifigkeiten, etc., herbeiführende Maßnahmen, wie z. B. lokal unterschiedliche Materialstrukturen, d. h. z. B. lokale Schwächungs- oder Verstärkungsstrukturen, lokal unterschiedliche Wandstärken, etc., erzeugt sein bzw. werden. Für aus Textilmaterialien gebildete Aufnahmeelemente 4 können lokal unterschiedliche Umformungseigenschaften beispielsweise durch lokal unterschiedliche Arten der Textilbindung, d. h. z. B. lokal unterschiedliche Gelege-, Gestrick-, Gewebe- oder Gewirkeeigenschaften, wie z. B. lokal unterschiedliche Maschendichte, Maschengröße, etc., sowie die gezielte Verwendung von Textilfasern unterschiedlicher mechanischer Eigenschaften, d. h. z. B. elastischer und nicht elastischer Textilfasern, erzeugt werden.

Alle Ausführungsbeispiele sind beliebig miteinander kombinierbar, sodass einzelne, mehrere oder sämtliche im Zusammenhang mit einem bestimmten Ausführungsbeispiel beschriebene Merkmale auf ein weiteres Ausführungsbeispiel übertragen werden können.

## Patentansprüche

1. Verfahren zur Herstellung eines eine ein Partikelschaummaterial (2) umfassende Partikelschaumstruktur (3) umfassenden Verbundstrukturbauteils (1), **gekennzeichnet durch** die Schritte:
- Bereitstellen wenigstens eines einen mit wenigstens einem partikulären Partikelschaummaterial (2) befüllbaren Aufnahmeraum (5) umfassenden umformbaren Aufnahmeelements (4),
- Befüllen des Aufnahmeraums (5) des Aufnahmeelements (4) mit wenigstens einem partikulären Partikelschaummaterial (2) unter Ausbildung eines gesondert handhabbaren umformbaren Zwischenbauteils (7),
- Durchführen wenigstens einer Maßnahme zum Umformen des Zwischenbauteils (7) von einer vor dem Durchführen der wenigstens einen Maßnahme gegebenen ersten Geometrie in eine nach dem Durchführen der wenigstens einen Maßnahme gegebene, von der ersten Geometrie zumindest abschnittsweise, gegebenenfalls vollständig, verschiedene zweite Geometrie,
- Durchführen wenigstens einer Maßnahme zum Verbinden des in dem Aufnahmeraum (5) des Aufnahmeelements (4) eingefüllten partikulären Partikelschaummaterials (2) von einem vor dem Durchführen der wenigstens einen Maßnahme gegebenen nicht verbundenen Zustand in einen nach Durchführen der Maßnahme gegebenen verbundenen Zustand.

2. Verfahren nach einem der vorhergehenden Ansprüche, **dadurch gekennzeichnet, dass** das Partikelschaummaterial (2) nach dem Durchführen der Maßnahme zum Verbinden des Partikelschaummaterials (2) vollständig von dem Aufnahmeelement (4) umschlossen ist.

3. Verfahren nach Anspruch 1 oder 2, **dadurch gekennzeichnet, dass** das Durchführen der Maßnahme zum Umformen des Zwischenbauteils (7) vor und/oder während und/oder nach dem Durchführen der Maßnahme zum Verbinden des Partikelschaummaterials (2) erfolgt.

4. Verfahren nach einem der vorhergehenden Ansprüche, **dadurch gekennzeichnet, dass** das Durchführen der Maßnahme zum Umformen des Zwischenbauteils (7) und
das Durchführen der Maßnahme zum Verbinden des Partikelschaummaterials (2) nach Einbringen des Zwischenbauteils (7) in eine durch wenigstens einen Werkzeugwandungsabschnitt (8a - 8d) definierte Werkzeugkavität (9) eines Werkzeugs (8) erfolgt.

5. Verfahren nach Anspruch 4, **dadurch gekennzeichnet, dass** das Durchführen der Maßnahme zum Umformen des Zwischenbauteils (7) durch eine Relativbewegung wenigstens eines Werkzeugwandungsabschnitts (8a - 8d) relativ zu einem zweiten Werkzeugwandungsabschnitt (8a - 8d) erfolgt.

6. Verfahren nach einem der vorhergehenden Ansprüche, **dadurch gekennzeichnet, dass** es kontinuierlich oder diskontinuierlich durchgeführt wird.

7. Verfahren nach einem der vorhergehenden Ansprüche, **dadurch gekennzeichnet, dass** als Maßnahme zum Verbinden des Partikelschaummaterials (2)
ein, insbesondere dampffreies bzw. dampfloses, Beaufschlagen des Partikelschaummaterials (2) mit thermischer Energie, insbesondere über eine Wärmeübertragung von wenigstens einem temperierbaren bzw. temperierten Werkzeugwandungsabschnitt (8a - 8d) auf das Partikelschaummaterial (2), und/oder
ein Beaufschlagen des Partikelschaummaterials (2) mit einem ein Verbinden Expansion des Partikelschaummaterials herbeiführenden Medium, insbesondere Dampf, und/oder
ein Beaufschlagen des Partikelschaummaterials (2) mit einer ein Verbinden des Partikelschaummaterials (2) herbeiführenden Strahlung erfolgt.

8. Verfahren nach einem der vorhergehenden Ansprüche, **dadurch gekennzeichnet, dass** das Durchführen der Maßnahme zum Verbinden des Partikelschaummaterials (2) und/oder das Durchführen der Maßnahme zum Umformen des Zwischenbauteils (7) mit einer Änderung des Umfangs des Aufnahmeelements (4) einhergeht.

9. Verfahren nach einem der vorhergehenden Ansprüche, **dadurch gekennzeichnet, dass** das Durchführen der Maßnahme zum Verbinden des Partikelschaummaterials (2) und/oder das Durchführen der Maßnahme zum Umformen des Zwischenbauteils (7) mit einer zumindest abschnittsweisen, insbesondere form- und/oder stoffschlüssigen, Verbindung des Partikelschaummaterials (2) mit dem Aufnahmeelement (4) einhergeht.

10. Verfahren nach einem der vorhergehenden Ansprüche, **dadurch gekennzeichnet, dass** ein aus einem gegenüber, insbesondere gasförmigen, Medien undurchlässiges oder durchlässigen Material gebildetes Aufnahmeelement (4) verwendet wird.

11. Verfahren nach einem der vorhergehenden Ansprüche, **dadurch gekennzeichnet, dass** ein aus einem, insbesondere gelege-, gestrick-, gewebe- oder gewirkeartigen, Textilmaterial gebildetes Aufnahmeelement (4), oder
ein aus einem Kunststoffmaterial gebildetes Aufnahmeelement (4), oder
ein aus einem Metall gebildetes Aufnahmeelement (4) verwendet wird.

12. Verfahren nach einem der vorhergehenden Ansprüche, **dadurch gekennzeichnet, dass** ein wenigstens eine bei Aufbringen einer bestimmten Umformenergie eine vorgegebene Umformgeometrie einnehmende Umformstruktur aufweisendes Aufnahmeelement (4) verwendet wird.

13. Verbundstrukturbauteil (1), hergestellt gemäß einem Verfahren nach einem der vorhergehenden Ansprüche.

14. Vorrichtung zur Herstellung eines eine ein Partikelschaummaterial (2) umfassende Partikelschaumstruktur (3) umfassenden Verbundstrukturbauteils (1), **gekennzeichnet durch** wenigstens eine Einrichtung, welche
zum Durchführen wenigstens einer Maßnahme zum Umformen eines in einem aufnahmeelementseitigen Aufnahmeraum (5) mit wenigstens einem Partikelschaummaterial (2) befüllten Aufnahmeelements (4) von einer vor dem Durchführen der wenigstens einen Maßnahme gegebenen ersten Geometrie in eine nach dem Durchführen der wenigstens einen Maßnahme gegebenen, von der ersten Geometrie zumindest abschnittsweise, gegebenenfalls vollständig, verschiedene zweite Geometrie eingerichtet ist, und/oder zum
Durchführen wenigstens einer Maßnahme zum Verbinden des in dem Aufnahmeraum (5) eines Aufnahmeelements (4) eingefüllten Partikelschaummaterials (2) von einem vor dem Durchführen der Maßnahme gegebenen nicht verbundenen Zustand in einen nach Durchführen der wenigstens einen Maßnahme gegebenen verbundenen Zustand eingerichtet ist.

15. Vorrichtung nach Anspruch 14, **dadurch gekennzeichnet, dass** die Einrichtung als ein eine durch ein oder mehrere Werkzeugwandungsabschnitte (8a - 8d) definierte Werkzeugkavität (9) umfassendes Werkzeug (8) ausgebildet ist oder ein solches umfasst.
